# EUROPEAN PATENT APPLICATION

(11) **EP 4 177 098 A1**
(43) Date of publication of application: **10.05.2023**
(21) Application number: 21207295.3
(22) Date of filing: 09.11.2021
(51) Int. Cl.: B60L 53/14, B60L 58/12, B60L 58/14, B60L 58/26

(54) **ENERGY MANAGEMENT SYSTEM FOR AN ENERGY STORAGE SYSTEM OF A VEHICLE**

(71) Applicant: Volvo Car Corporation, 40531 Göteborg (SE)
(72) Inventor: POURABDOLLAH, Mitra, 40531 Göteborg (SE); FORSMAN, Jimmy, 40531 Göteborg (SE); LARSSON, Viktor, 40531 Göteborg (SE); BOHMAN, Mats, 40531 Göteborg (SE)
(74) Representative: Maiwald GmbH

(57) **Abstract**

The present disclosure relates to an energy management system for an energy storage system of a vehicle, a vehicle comprising such an energy management system, an energy management method for an energy storage system of a vehicle and a computer program element for an energy management system of a vehicle.

The energy management system comprises a propulsion sensor unit, a heat sensor unit, an energy storage sensor unit, a navigation unit and a control unit. The propulsion sensor unit is configured to monitor at least one propulsion parameter of the vehicle. The heat sensor unit is configured to monitor at least one thermal parameter of the vehicle. The energy storage sensor unit is configured to monitor at least one state parameter of the energy storage system, wherein the state parameter comprises at least a current capacity of the energy storage system. The control unit is configured to receive navigation data based on a calculation of a route from a current position to a destination of the vehicle by the navigation unit. The control unit is configured to estimate an upcoming energy consumption based on the propulsion parameter, the thermal parameter and/or the navigation data. The control unit is further configured to adjust at least one of the thermal parameter and the propulsion parameter of the vehicle based on the current capacity of the energy storage system to reduce the upcoming energy consumption and/or a trip time of the vehicle to the destination.

## Description

### TECHNICAL FIELD

The present disclosure relates to an energy management system for an energy storage system of a vehicle, a vehicle comprising such an energy management system, an energy management method for an energy storage system of a vehicle and a computer program element for such an energy management system of a vehicle.

### BACKGROUND ART

An electric vehicle such as battery electric vehicle may be powered by a high voltage battery system. However, a utilization of such a battery system is often limited due to a long charging time and/or a narrow operation range compared to the conventional vehicles comprising an ICE (internal combustion engine). In particular, battery health, internal resistance and/or charging/discharging power and energy availability of the battery system may be affected by operating temperature conditions. Conditioning the battery system to an optimal temperature to improve its performance requires energy, which may again influence the operation range. There is consequently a need for a high-level controller, or an optimal thermal energy management system that controls energy and thermal transfer inside the vehicle to balance an operating performance, range and charging time of the battery system.

Conventional thermal energy management is, however, often based on static information of the vehicle and/or the battery system without considering real-time information.

### SUMMARY

Hence, there may be a need to provide an improved thermal energy management system for a vehicle, which may utilize real-time information as well as information about an upcoming trip.

The problem is at least partially solved or alleviated by the subject matter of the independent claims of the present disclosure, wherein further examples are incorporated in the dependent claims. It should be noted that the aspects of the disclosure described in the energy management system for an energy storage system of a vehicle, the vehicle comprising such an energy management system, an energy management method for an energy storage system of a vehicle and a computer program element for such an energy management system of a vehicle.

According to the present disclosure, an energy management system for an energy storage system of a vehicle is presented. The energy management system comprises a propulsion sensor unit, a heat sensor unit, an energy storage sensor unit, a navigation unit and a control unit. The propulsion sensor unit is configured to monitor at least one propulsion parameter of the vehicle. The heat sensor unit is configured to monitor at least one thermal parameter of the vehicle. The energy storage sensor unit is configured to monitor at least one state parameter of the energy storage system, wherein the state parameter comprises at least a current capacity of the energy storage system. The control unit is configured to receive navigation data based on a calculation of a route from a current position to a destination of the vehicle by the navigation unit. The control unit is configured to estimate an upcoming energy consumption based on the at least one propulsion parameter, the at least one thermal parameter and/or the navigation data. The control unit is further configured to adjust at least one of the thermal parameter and the propulsion parameter of the vehicle based on the current capacity of the energy storage system to reduce the upcoming energy consumption and/or a trip time of the vehicle to the destination.

The energy management system according to the present disclosure may utilize real-time vehicle information during a trip and/or predictive information of an upcoming trip to optimize a performance of the energy storage system by adjusting the at least one thermal parameter and/or the at least one propulsion parameter. The optimization may be performed iteratively during the trip to consider variation, disturbances and/or mismatch in an estimation model based on the real-time information in the estimation of the upcoming energy consumption. In particular, the energy management system may assess currently available energy in the energy storage system and energy required to reach the destination, e.g. charging station. The energy storage system is generally sensitive to temperature changes and operate best in rather small ranges of temperatures. Thus, by optimizing the at least one thermal parameter to be applied in the vehicle, an operational capacity of the energy storage system, an operating range of the vehicle and/or charging performance may be improved while maintaining their performance.

The energy storage system may be a high voltage energy storage system, which provides tens of kilowatt-hours as energy for operating the vehicle. The energy storage system may comprise a plurality of rechargeable energy storage modules and/or energy storage cells such as lithium-ion cells, nickel metal hydride cells or the like.

The propulsion sensor unit may be configured to monitor at least one, preferably a plurality of propulsion parameters of the vehicle and generate propulsion monitoring data. The propulsion parameter may be detected at various propulsion actuators capable to propel the vehicle. Thus, the propulsion parameter may represent a current operational condition of the vehicle. The propulsion parameter, in other words mechanical driving parameter, may comprise at least one of a speed, a mass, an acceleration rate, a deceleration rate, a mechanical power and an electrical power of an electric machine of the vehicle.

The heat sensor unit may be configured to monitor at least one, preferably a plurality of thermal parameters of the vehicle and generate thermal monitoring data. The thermal parameters may be based on a temperature of various components arranged in the vehicle such as vehicle cabin, drivetrain system comprising at least one electric machine and cooling/heating system of the vehicle, etc. Since the performance of the energy storage system is generally influenced by the temperature, the thermal parameter of the various components of the vehicle generating or requiring heat may directly affect a current capacity of the energy storage system.

The navigation unit may provide a real-time map of the current position of the vehicle and calculate a route from the current position to a requested destination. The navigation unit may utilize signals received from a position determination system such as satellite, radio and/or GSM (Global System for Mobile Communications) and a geographic information system such as topology, road, air and/or sea maps. The requested destination may be a final destination of the trip, a stopover and/or a charging station to recharge the energy storage system. Based on the route calculation from the current position to the requested destination, the navigation unit may generate navigation data. In addition, the navigation unit may further provide information on a charging station, in case the destination is the charging station.

The energy storage sensor unit may be configured to monitor a state of the energy storage system such as state of energy (SoE), state of health (SoH), temperature of the energy storage system, etc. For a safe operation and a reliable power estimation, the energy storage system may be associated with a battery monitoring system (BMS). The BMS is an electronic system, which constantly monitors parameters related to the energy storage system such as state of charge and/or state of health. Hence, the energy storage sensor unit may be a part of the battery monitoring system or at least coupled with the BMS.

The SoE may represent residual energy stored in the energy storage system. The SoE may be defined as the ratio of the remaining energy to the total energy in the energy storage system. The SoE may be influenced by temperature and internal resistance. The value of the SoE varies between 0% and 100%.

The SoH can be understood as an indication of a current condition of the energy storage system compared to their original capacity. The SoH may indicate a returnable (usable) or net capacity of a battery cell through its cumulative stress-life caused by repeating charging and discharging. The SoH may be shown as percentages as well. The SoH may be an indication of how the energy storage system meets manufacturing specification. Accordingly, 100% of the SoH may mean that the parameters may meet the specification of the energy storage system at a time of manufacture. However, the SoH may decrease over time, as the energy storage system degrades, which would cause a decrease of an ability of the energy storage system to hold a charge and to deliver current.

The control unit may be at least part of an electronic control unit (ECU) of the vehicle and configured to receive the propulsion monitoring data containing the at least one propulsion parameter, the thermal monitoring data containing the at least one thermal parameter and/or the navigation data to estimate the upcoming energy consumption to reach the destination. For instance, the control unit may be configured to build a vehicle model during the trip based on factors such as amass, a speed and/or an average propulsive power consumption of the vehicle to calculate power consumption.

The vehicle model may be used together with the navigation data such as distance to the charging station, an average real-time speed, a speed limit, altitude profile of the route or the like to estimate a predictive propulsive power demand over the remaining route and/or a driving time. Based on the predictive upcoming energy consumption, a SoE profile of the energy storage system can be calculated.

The control unit may then assess whether the estimated upcoming energy consumption is higher or lower than the currently available energy capacity of the energy storage system. In case the current capacity of the energy storage system is less than the upcoming energy consumption, the control unit may adjust the at least one thermal parameter of the vehicle, e.g. energy storage system and/or cabin climatization, to optimize a thermal management of the vehicle. In particular, the energy management system may maintain the energy storage system to operate in a predefined temperature range, which is optimal for an operation of the energy storage system and/or the vehicle.

In case the destination is a fast-charging station and the estimated upcoming energy consumption is less than the currently available battery energy, the control unit may adjust the thermal parameter to improve charging performance, even if it increases the upcoming energy consumption.

Additionally or alternatively, a charging schedule and/or a designated charging station may be programmed in the control unit regardless. In such case, the control unit may adjust the at least one thermal parameter of the vehicle to reduce the upcoming energy consumption and/or optimize the charging performance of the energy storage system. As a result, the energy management system may increase a capacity and/or a lifespan of the energy storage system for propelling the vehicle.

In an example, the control unit may be further configured to adjust the propulsion parameter of the vehicle. In addition to the adjustment of the thermal parameter of the vehicle, the propulsion parameter to be applied to propel the vehicle may be adjusted to optimize or reduce the upcoming energy consumption. The adjustment of the propulsion parameter may be performed particularly based on the navigation data, which may provide information on a distance to the destination, the altitude profile of the route, etc. The control unit may adjust the propulsion parameter to minimize or even avoid instantaneous high energy consumption such as sudden acceleration and/or to limit maximum speed of the vehicle. Accordingly, the control unit may ensure a steady driving behavior of the vehicle.

In an example, the thermal parameter comprises at least one temperature parameter of a heat pump system transferring heat between a climate circuit and an electric drivetrain circuit of the vehicle. The heat pump system may be configured to utilize low temperature heat sources. A heat pump of the heat pump system may thermally connect the climate circuit and the electric drivetrain circuit to efficiently transfer heat, which may improve the thermal management and energy management of the vehicle.

The climate circuit and the electric drivetrain circuit may be arranged in the vehicle and configured to perform the thermal management of the vehicle by thermally connecting components of the vehicle generating or requiring heat to optimize their function. The term "thermally connecting" may be understood in that a heat transfer medium may circulate among the components generating or requiring heat to transfer heat from at least one component to another component.

The thermal parameter may comprise one or more temperature parameter of the heat pump system. Hence, the control unit may determine the upcoming energy consumption based on the propulsion parameter, the thermal parameter of the heat pump system and/or the navigation data. Further, the control unit may be configured to adjust the temperature parameter of the heat pump system to reduce upcoming energy consumption, thus to optimize the thermal management of the heat pump system.

In an example, the at least one temperature parameter comprises a temperature parameter of the climate circuit comprising at least an HVCH (high voltage coolant heater) and/or an HVAC (heating, ventilation and air conditioning) for active heating and cooling the energy storage system and/or a vehicle cabin.

The high voltage coolant heater (HVCH) may act as a heat booster for quickly providing heat to the vehicle cabin and/or the vehicle components, particularly to the energy storage system to improve the operation range of the energy storage system by maintaining the temperature at an optimal level, e.g. adjusted thermal parameter. The heating, ventilation and air conditioning (HVAC) may be configured to adjust a temperature in the vehicle cabin and/or the vehicle components, particularly to the energy storage system. The HVCH and the HVAC may be thermally coupled to efficiently utilize the heat transfer.

The heat sensor unit may monitor the temperature parameter of the climate circuit, the HVCH and/or the HVAC and generate respective thermal monitoring data. The HVCH and/or the HVAC may consume energy which may negatively affect the current capacity of the energy storage system. However, by optimizing heat generation/dissipation and/or heat transfer in the system, e.g. using at least the HVCH and the HVAC, the upcoming energy consumption may be reduced, which may lead to an increase of the operation range of the energy storage system. Thus, the performance of the energy storage system may be improved while providing comfort climate in the vehicle cabin.

In an example, the at least one temperature parameter further comprises a temperature parameter of the electric drivetrain circuit comprising at least the energy storage system and electric drivetrain components of the vehicle. The electric drivetrain circuit may comprise at least the energy storage system and the electric drivetrain components such as an electric machine, power electronics including inverters, direct current converters, charging electronics, and computing units or the like. The electric drivetrain circuit may further comprise a radiator system and at least one heat exchanger. The heat transfer medium, in other words a coolant medium may circulate between the climate circuit and the electric drivetrain circuit, for instance via the heat pump, and the heat exchanger to transfer heat.

The temperature parameter of the electric drivetrain circuit may indicate heat generated in the energy storage system transferred to the heat exchanger to decrease the temperature of the energy storage system or heat transferred to the energy storage system to increase the temperature of the energy storage system. Additionally or alternatively, the temperature parameter may indicate heat generated in the electric drivetrain components transferred to the heat exchanger to decrease the temperature of the electric drivetrain components and/or to the energy storage system to increase the temperature of the energy storage system.

Hence, when determining the upcoming energy consumption, the control unit may also consider the temperature parameter coupled with the energy storage system and/or the electric drivetrain components. Further, the control unit may be configured to adjust or optimize the thermal parameter, i.e. the temperature parameter of the electric drivetrain circuit to reduce upcoming energy consumption and to improve the performance of the energy storage system.

In an example, the upcoming energy consumption further comprises residual energy of the energy storage system to an energy source system. Accordingly, the energy storage system may comprise at least a minimum energy capacity to avoid a deep discharging of the energy storage system, when the vehicle arrives the destination. Hence, it is ensured that the vehicle may reach the charging station without being re-routed due to a shortage of the energy capacity.

In an example, the navigation unit is configured to communicate with the energy source system and receive information about available power, occupancy and/or waiting time. Preferably, both of the navigation unit and the energy source system may comprise a wireless communication means such as Wi-Fi, cellular technologies, e.g. LTE, 5G or the like. The navigation unit may receive current information of the energy source system. Accordingly, the control unit may adjust the propulsion parameter to reduce total trip time by matching the expected power availability at the charging station. According to the information from the energy source system, a charging time may be calculated as a function of SoE at arrival, connecting energy of the energy storage system to the energy source system, temperature of the energy storage system and available power at the energy source system.

In an example, the state parameter of the energy storage sensor unit further comprises a current temperature of the energy storage system. In other words, the energy storage sensor unit may monitor the current temperature of the energy storage system as well and provide the state parameter including the current temperature to the control unit. The control unit may thus consider the current temperature of the energy storage system, which may be directly coupled with the performance, e.g. power and/or operation range of the energy storage system, when estimating the upcoming energy consumption. Further, the control unit may adjust the thermal parameter of the vehicle, particularly the climate circuit, the electric drivetrain circuit and/or heat pump to increase or decrease the temperature of the energy storage system, thus to optimize the upcoming energy consumption and the charging performance.

In an example, the state parameter of the energy storage sensor unit further comprises an auxiliary energy consumption of the energy storage system by at least one subsystem of the vehicle. In general, the energy storage system provides electric power not only to propulsion systems such as an electric front axle drive system and/or an electric rear axle drive system to operate the vehicle but also to low voltage subsystems for non-propulsion loads such as door/window actuation system, navigation system, sensor systems for automated driving functions, etc.

Accordingly, the state parameter of the energy storage sensor unit may represent a current energy consumption and/or the remaining energy capacity of the energy storage system based on the propulsive energy consumption and the auxiliary energy consumption. In an example, the control unit may be configured to adjust the auxiliary energy consumption by deactivating one or more unnecessary subsystems.

In an example, the propulsion parameter comprises at least one of a speed, a mass, an acceleration rate and a deceleration rate of the vehicle. The propulsion sensor unit may generate propulsion monitoring data based on the propulsion parameter, which may represent a current driving condition of the vehicle. Such propulsion parameter may be directly coupled with the current energy consumption of the vehicle, which can be optimized by the control unit based on the assessment between the current capacity of the energy storage system and predicted upcoming energy consumption.

In an example, the navigation unit is configured to receive road information in a regular period for calculating the route. The road information comprises at least one of an altitude change, an average real-time speed and a speed limit. The navigation unit may receive the road information in a predefined regular period, for instance every 1 meter to 1000 meters.

The road information may be provided to the navigation unit by at least one of a position determination system such as satellite, radio and/or GSM (Global System for Mobile Communications) and a geographic information system such as topology, road, air and/or sea map. Additionally, the road information may be provided by a V2X (vehicle to everything) means allowing vehicles to share objects detected by the vehicle's onboard sensors such as cameras and radars, thus afford greater awareness of on-road objects and potential hazards. For instance, the V2X means may generate traffic management data on a forward collision, a blind spot, intersection movement, emergency vehicle approaching, roadworks or the like and provide such data to the navigation unit.

In particular, the altitude change of the route may be a relevant parameter to determine the upcoming energy consumption, since the vehicle may require more energy to drive uphill than on flatland but recuperate brake energy during driving downhill. Additionally, severe traffic congestion may also influence the determination of the upcoming energy consumption. By providing road information to the navigation unit at a regular interval, the control unit may determine the upcoming energy consumption iteratively based on the road information, which is regularly updated. Accordingly, a dynamic prediction of the upcoming energy consumption may be realized.

In an example, the control unit is further configured to adjust the thermal parameter and/or the propulsion parameter at a regular interval. The control unit may be configured to adapt the adjustment of the thermal parameter and/or the propulsion parameter based on the upcoming energy consumption updated at a regular interval. The interval for adjusting the thermal parameter and/or the propulsion parameter may be, for instance every 0,5 minute to 3 minutes. Accordingly, a dynamic adaption of the ongoing energy consumption of the energy storage system may be realized.

In an example, the control unit may communicate with an occupant in the vehicle about the adjusted thermal parameter and/or propulsion parameter via a user interface means. The user interface means comprise, for instance a graphical user interface element to inform the occupant about the thermal parameter and/or propulsion parameter adjusted at a predefined regular interval based on the current energy capacity of the energy storage system and the predicted upcoming energy consumption.

According to the present disclosure, a vehicle is presented. The vehicle comprises an energy management system as described above. The vehicle is a battery electric vehicle. The vehicle utilizing electric energy for propelling may thus comprise an improved thermal energy management system to improve an efficiency of an energy storage system. Accordingly, an operating range of the vehicle may be increased and/or the upcoming energy consumption and the total trip time may be improved while maintaining its performance.

According to the present disclosure, an energy management method for an energy storage system is presented. The method comprises, but not necessarily in this order:
- monitoring at least one state parameter of the energy storage system, the state parameter comprising at least a current capacity of the energy storage system
- monitoring at least one propulsion parameter of the vehicle,
- monitoring at least one thermal parameter of the vehicle,
- receiving navigation data based on a calculation of a route from a current position to a destination of the vehicle,
- estimating an upcoming energy consumption based on the propulsion parameter, the thermal parameter and/or the navigation data, and
- adjusting at least one of the thermal parameter and the propulsion parameter of the vehicle based on the current capacity of the energy storage system to reduce the upcoming energy consumption and/or a trip time of the vehicle to the destination.

According to the present disclosure, a computer program element is presented. The computer program element is configured for an energy management system as described above. The program element is adapted to perform the method steps as described above, when being executed by a processing element.

It should be noted that the above examples may be combined with each other irrespective of the aspect involved. Accordingly, the method may be combined with structural features and, likewise, the system may be combined with features described above with regard to the method.

These and other aspects of the present examples will become apparent from and elucidated with reference to the examples described hereinafter.

### BRIEF DESCRIPTION OF DRAWINGS

Exemplary aspects will be described in the following with reference to the following drawings.
- Fig. 1: shows schematically and exemplarily an example of a vehicle comprising an energy management system according to the present disclosure.
- Fig. 2: shows schematically and exemplarily an example of an energy management system for an energy storage system of a vehicle according to the present disclosure.

### DETAILED DESCRIPTION

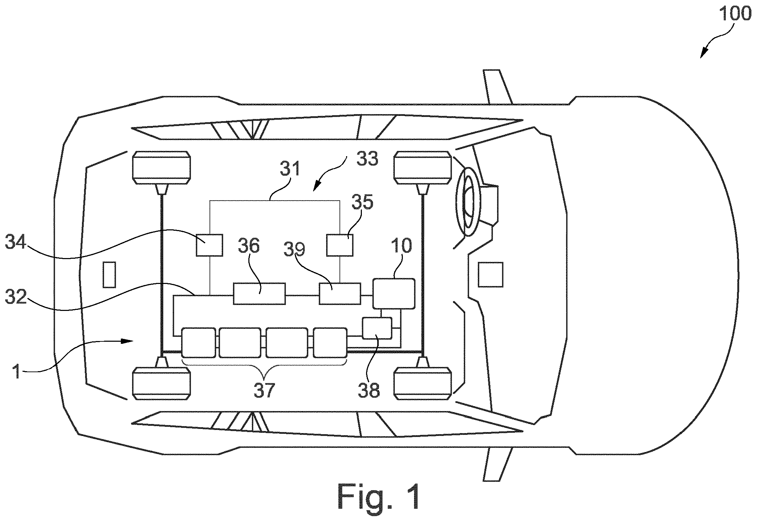

Fig. 1 shows a vehicle 100, which may be a battery electric vehicle. Such vehicles comprise an energy storage system 10 supplying electric energy to propel the vehicle 100. Further, the vehicle 100 comprises an energy management system 1 to optimize a performance of the energy storage system 10 by iteratively comparing a current capacity of the energy storage system 10 with an upcoming energy consumption and correspondingly adapting operational parameters of the vehicle 100. The operational parameters may comprise, for instance, propulsion parameters and/or thermal parameters of the vehicle.

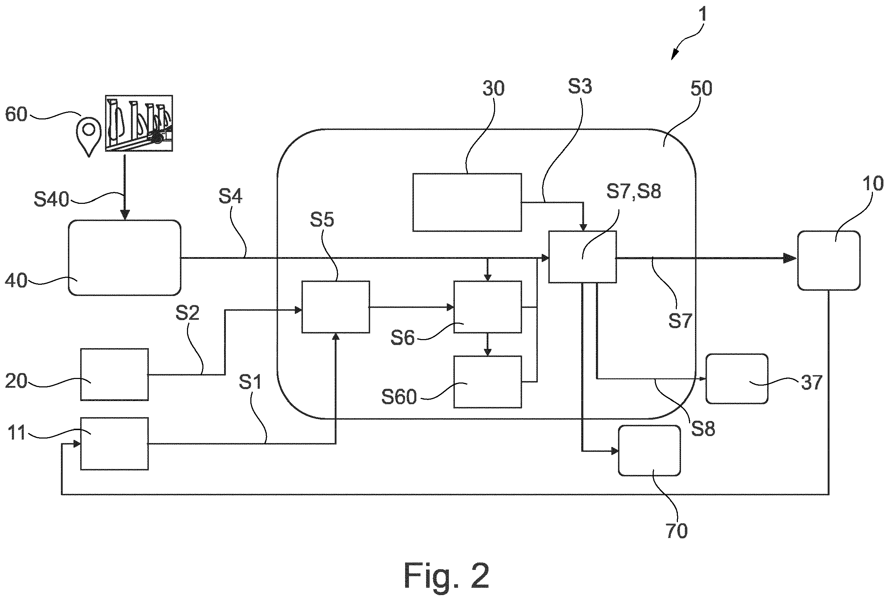

Fig. 2 shows the energy management system 1 comprising a propulsion sensor unit 20, a heat sensor unit 30, an energy storage sensor unit 11, a navigation unit 40 and a control unit 50. The propulsion sensor unit 20 is configured to monitor at least one propulsion parameter, preferably a plurality of propulsion parameters of the vehicle 100. The propulsion parameter is related to mechanical and/or electrical driving parameter representing a current operational condition of the vehicle 100. The propulsion parameter comprises at least one of a speed, a mass, an acceleration rate, a deceleration rate, electric power of the energy storage system 10 and electric power of an electric machine of the vehicle 100. Accordingly, the propulsion sensor unit 20 generates propulsion monitoring data and sends them to the control unit 50.

The heat sensor unit 30 is configured to monitor at least one, preferably a plurality of thermal parameters of the vehicle 100 and generate thermal monitoring data. The thermal parameters may be based on temperature of various components arranged in the vehicle 100. As shown in Fig. 1, the vehicle 100 comprises a heat pump system 33 connecting a climate circuit 31 and an electric drivetrain circuit 32. The heat pump 39, the climate circuit 31 and the electric drivetrain circuit 32 are configured to perform an optimal thermal management of the vehicle 100 by thermally connecting components of the vehicle 100 generating or requiring heat.

In particular, the climate circuit 31 is configured to control climate of a vehicle cabin. The climate circuit 31 comprises at least an HVAC (heating, ventilation and air conditioning) 34 and an HVCH (high voltage coolant heater) 35 for active heating and cooling the vehicle cabin and/or the energy storage system 10. Additionally, the HVCH 35 is further configured to heat the energy storage system 10 in case an atmospheric temperature is too low to operate the energy storage system 10.

The electric drivetrain circuit 32 comprises the energy storage system 10 and the electric drivetrain components such as an electric machine 37, power electronics 37 including inverters, direct current converters, charging electronics 38, and computing units (not shown). The electric drivetrain circuit 32 may further comprise a radiator system (not shown) and at least one heat exchanger 36. The heat transfer medium, in other words coolant medium may circulate between the climate circuit 31 and the electric drivetrain circuit 32 via the heat pump 33 and the heat exchanger 36 to transfer heat. Thus, the thermal parameter monitored by the heat sensor unit 30 comprises at least one temperature parameter of the climate circuit 31, electric drivetrain circuit 32 and/or the heat pump 39.

The energy storage sensor unit 11 is configured to monitor at least one state parameter of the energy storage system 10, wherein the state parameter comprises at least a current capacity of the energy storage system 10. The energy storage sensor unit 11 monitors particularly the state of energy (SoE) of the energy storage system 10, which indicates a ratio between currently available energy capacity and total energy capacity that can be saved in the energy storage system 10.

In addition, the energy storage sensor unit 11 also monitors a current temperature of the energy storage system 10 and an auxiliary energy consumption of the energy storage system 10 by at least one subsystem of the vehicle 100 as well. The current temperature of the energy storage system may be directly coupled with the performance, e.g. operation range of the energy storage system. The auxiliary energy consumption may be caused by low voltage subsystems for non-propulsion loads. Accordingly, the state parameter of the energy storage system 10 may represent a current energy consumption and/or the currently available energy capacity of the energy storage system 10 based on the propulsive energy consumption and the auxiliary energy consumption.

The navigation unit 40 is configured to calculate a route from a current position to a destination of the vehicle 100 and generate navigation data based thereon. The navigation unit 40 may provide a real-time map of the current position of the vehicle 100 and calculate the route from the current position to a requested destination. The requested destination may be a final destination of the trip, a stopover and/or a charging station to recharge the energy storage system 10. When calculating the route, the navigation unit 40 obtains road information at a predefined period, for instance every 1 meter to 1000 meters. The road information may be at least one of an altitude change, an average real-time speed and/or a speed limit.

The navigation unit 40 is further configured to communicate with an energy source system 60 such as charging station and receive information about available power, occupancy, waiting time, energy costs, etc. The navigation unit 40 communicates with the energy source system 60 preferably via a wireless communication means such as a cellular network or Wi-Fi. Accordingly, the control unit may adjust at least one of the thermal parameter and the propulsion parameter to reduce total trip time by matching the expected power availability at the charging station.

The energy management system 1 further comprises a user interface means 70 configured to communicate with an occupant in the vehicle about the adjusted thermal parameter and/or propulsion parameter means. The user interface means may comprise, for instance a graphical user interface element integrated in a Center Stack Display (CSD) and/or an Infotainment Head Unit (IHU).

As also shown in Fig. 2, the energy management method comprises
- monitoring S1 at least one state parameter of the energy storage system 10, the state parameter comprising at least a current capacity of the energy storage system 10,
- monitoring S2 at least one propulsion parameter of the vehicle 100,
- monitoring S3 at least one thermal parameter of the vehicle 100,
- receiving S4 navigation data based on a calculation of a route from a current position to a destination of the vehicle 100,
- determining S5 a current energy consumption based on the at least one propulsion parameter and the at least one state parameter,
- establishing S60 a vehicle model based on the current energy consumption,
- estimating S6 an upcoming energy consumption based on the propulsion parameter, the thermal parameter and/or the navigation data by utilizing the vehicle model,
- adjusting S7 the thermal parameter, and
- adjusting S8 the propulsion parameter.

The upcoming energy consumption further comprises residual energy of the energy storage system 10 to avoid a deep discharge of the energy storage system 10. The control unit 50 can optimize the thermal parameter and/or the propulsion parameter at a predefined regular interval iteratively along with the regularly updated road information and predictive energy consumption. Accordingly, a dynamic adaption of the ongoing energy consumption of the energy storage system 10 may be realized.

It has to be noted that examples of the disclosure are described with reference to different subject matters. In particular, some examples are described with reference to method type claims whereas other examples are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed examples. Other variations to the disclosed examples can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An energy management system (1) for an energy storage system (10) of a vehicle (100), comprising
- a propulsion sensor unit (20),
- a heat sensor unit (30),
- an energy storage sensor unit (11),
- a navigation unit (40), and
- a control unit (50),
the propulsion sensor unit (20) being configured to monitor at least one propulsion parameter of the vehicle (100),
the heat sensor unit (30) being configured to monitor at least one thermal parameter of the vehicle (100),
the energy storage sensor unit (11) being configured to monitor at least one state parameter of the energy storage system (10),
the state parameter comprising at least a current capacity of the energy storage system (10),
the control unit (50) being configured to receive navigation data based on a calculation of a route from a current position to a destination of the vehicle (100) by the navigation unit (40),
the control unit (50) being configured to estimate an upcoming energy consumption based on at least one of the at least one propulsion parameter, the at least one thermal parameter and the navigation data, and
the control unit (50) being further configured to adjust at least one of the at least one thermal parameter and the at least one propulsion parameter of the vehicle (100) based on the current capacity of the energy storage system (10) to reduce the upcoming energy consumption and/or a trip time of the vehicle (100) to the destination.

2. The energy management system (1) according to claim 1, the thermal parameter comprising at least one temperature parameter of a heat pump system transferring heat between a climate circuit and an electric drivetrain circuit of the vehicle (100).

3. The energy management system (1) according to claim 2, the at least one temperature parameter comprising a temperature parameter of the climate circuit comprising at least an HVCH and/or an HVAC for active heating and cooling the energy storage system (10) and/or a vehicle cabin.

4. The energy management system (1) according to claim 2 or 3, the at least one temperature parameter further comprising a temperature parameter of the electric drivetrain circuit comprising at least the energy storage system (10) and electric drivetrain components of the vehicle (100).

5. The energy management system (1) according to claim 1, the upcoming energy consumption further comprising residual energy of the energy storage system (10) to avoid a deep discharge of the energy storage system (10).

6. The energy management system (1) according to any of the preceding claims, the navigation unit (40) being configured to communicate with the energy source system (60) and receive information about available power, occupancy and/or waiting time.

7. The energy management system (1) according to any of the preceding claims, the state parameter of the energy storage sensor unit (11) further comprising a current temperature of the energy storage system (10).

8. The energy management system (1) according to any of the preceding claims, the state parameter of the energy storage sensor unit (11) further comprising an auxiliary energy consumption of the energy storage system (10) by at least one subsystem of the vehicle (100).

9. The energy management system (1) according to claim 1, the propulsion parameter comprising at least one of a speed, a mass, an acceleration rate and a deceleration rate of the vehicle (100).

10. The energy management system (1) according to any of the preceding claims, the navigation unit (40) being configured to receive road information in a regular period for calculating the route, the road information comprising at least one of an altitude change, an average real-time speed and/or a speed limit.

11. The energy management system (1) according to any of the preceding claims, the control unit (50) being further configured to adjust the thermal parameter and/or the propulsion parameter at a regular interval.

12. A vehicle (100), comprising an energy management system (1) according to any of the preceding claims 1 to 11, the vehicle (100) being a battery electric vehicle.

13. An energy management method for an energy storage system (10) of a vehicle (100), comprising:
- monitoring (SI) at least one state parameter of the energy storage system (10), the state parameter comprising at least a current capacity of the energy storage system (10),
- monitoring (S2) at least one propulsion parameter of the vehicle (100),
- monitoring (S3) at least one thermal parameter of the vehicle (100),
- receiving (S4) navigation data based on a calculation of a route from a current position to a destination of the vehicle (100),
- estimating (S6) an upcoming energy consumption based on at least one of the at least one propulsion parameter, the at least one thermal parameter and/or the navigation data, and
- adjusting (S7) at least one of the at least one thermal parameter and the at least one propulsion parameter of the vehicle (100) based on the current capacity of the energy storage system (10) to reduce the upcoming energy consumption and/or a trip time of the vehicle (100) to the destination.

14. A computer program element, for an energy management system (1) according to claims 1 to 11, which, when being executed by a processing element, being adapted to perform the method steps of the method claim 13.

## Amended claims

### Amended claims in accordance with Rule 137(2) EPC.

1. An energy management system (1) for an energy storage system (10) of a vehicle (100), comprising
- a propulsion sensor unit (20),
- a heat sensor unit (30),
- an energy storage sensor unit (11),
- a navigation unit (40), and
- a control unit (50),
the propulsion sensor unit (20) being configured to monitor at least one propulsion parameter of the vehicle (100),
the at least one propulsion parameter being related to mechanical and/or electrical driving parameter representing a current operational condition of the vehicle (100),
the heat sensor unit (30) being configured to monitor at least one thermal parameter of the vehicle (100),
the thermal parameter comprising at least one temperature parameter of a heat pump system transferring heat between a climate circuit and an electric drivetrain circuit, a cooling system and a heating system of the vehicle (100),
the energy storage sensor unit (11) being configured to monitor at least one state parameter of the energy storage system (10),
the state parameter comprising at least a current capacity of the energy storage system (10),
the control unit (50) being configured to receive navigation data based on a calculation of a route from a current position to a destination of the vehicle (100) by the navigation unit (40),
the control unit (50) being configured to estimate an upcoming energy consumption from the current position to the destination based on at least one of the at least one propulsion parameter, the at least one thermal parameter and the navigation data, and **characterized in that**
the control unit (50) being further configured to adjust at least one of the at least one thermal parameter and the at least one propulsion parameter of the vehicle (100) based on the current capacity of the energy storage system (10) to reduce the upcoming energy consumption and/or a trip time of the vehicle (100) to the destination.

2. The energy management system (1) according to claim 1, the at least one temperature parameter comprising a temperature parameter of the climate circuit comprising at least an HVCH and/or an HVAC for active heating and cooling the energy storage system (10) and/or a vehicle cabin.

3. The energy management system (1) according to claim 1 or 2, the at least one temperature parameter further comprising a temperature parameter of the electric drivetrain circuit comprising at least the energy storage system (10) and electric drivetrain components of the vehicle (100).

4. The energy management system (1) according to claim 1, the upcoming energy consumption further comprising at least a minimum energy capacity to avoid a deep discharge of the energy storage system (10).

5. The energy management system (1) according to any of the preceding claims, the navigation unit (40) being configured to communicate with an energy source system (60) and receive information about available power, occupancy and/or waiting time.

6. The energy management system (1) according to any of the preceding claims, the state parameter of the energy storage sensor unit (11) further comprising a current temperature of the energy storage system (10), optionally a state of charge of the energy storage system (10).

7. The energy management system (1) according to any of the preceding claims, the state parameter of the energy storage sensor unit (11) further comprising an auxiliary energy consumption of the energy storage system (10) by at least one subsystem of the vehicle (100).

8. The energy management system (1) according to claim 1, the propulsion parameter comprising at least one of a speed, a mass, an acceleration rate and a deceleration rate of the vehicle (100).

9. The energy management system (1) according to any of the preceding claims, the navigation unit (40) being configured to receive road information in a regular period for calculating the route, the road information comprising at least one of an altitude change, an average real-time speed, a speed limit, information on the energy source system (60).

10. The energy management system (1) according to any of the preceding claims, the control unit (50) being further configured to adjust the thermal parameter and/or the propulsion parameter at a regular interval.

11. A vehicle (100), comprising an energy management system (1) according to any of the preceding claims 1 to 10, the vehicle (100) being a battery electric vehicle.

12. An energy management method for an energy storage system (10) of a vehicle (100), comprising:
- monitoring (S1) at least one state parameter of the energy storage system (10), the state parameter comprising at least a current capacity of the energy storage system (10),
- monitoring (S2) at least one propulsion parameter of the vehicle (100),
the at least one propulsion parameter being related to mechanical and/or electrical driving parameter representing a current operational condition of the vehicle (100),
- monitoring (S3) at least one thermal parameter of the vehicle (100),
the thermal parameter comprising at least one temperature parameter of a heat pump system transferring heat between a climate circuit and an electric drivetrain circuit of the vehicle (100), a cooling system and a heating system ,
- receiving (S4) navigation data based on a calculation of a route from a current position to a destination of the vehicle (100),
- estimating (S6) an upcoming energy consumption from the current position to the destination based on at least one of the at least one propulsion parameter, the at least one thermal parameter and/or the navigation data, and
- adjusting (S7) at least one of the at least one thermal parameter and the at least one propulsion parameter of the vehicle (100) based on the current capacity of the energy storage system (10) to reduce the upcoming energy consumption and/or a trip time of the vehicle (100) to the destination.

13. A computer program element, for an energy management system (1) according to claims 1 to10, which, when being executed by a processing element, being adapted to perform the method steps of the method claim 12.
